# NOUVEAU FASCICULE DE BREVET EUROPEEN

(11) **EP 3 532 324 B2**
(45) Date de publication et mention de la décision concernant l'opposition: **06.08.2025**
(45) Mention de la délivrance du brevet: 16.09.2020
(21) Numéro de dépôt: 17787212.4
(22) Date de dépôt: 26.10.2017
(51) Int. Cl.: B60K 6/387, B60K 6/40, B60K 6/48, F16D 25/0638, F16F 15/12, F16F 15/131, F16F 15/121

(54) **DISPOSITIF DE TRANSMISSION POUR VEHICULE HYBRIDE**
GETRIEBEVORRICHTUNG FÜR HYBRIDFAHRZEUG
TRANSMISSION DEVICE FOR A HYBRID VEHICLE

(30) Priorité: 27.10.2016 FR 1660466
(43) Date de publication de la demande: 04.09.2019
(73) Titulaire: Valeo Embrayages, 80009 Amiens Cedex 2 (FR)
(72) Inventeur: DOLE, Arnaud, 80009 Amiens (FR); THIBAUT, François, 80009 Amiens (FR); COMMEINE, Emmanuel, 80009 Amiens (FR); LEBAS, Gilles, 80009 Amiens (FR); BACQ, Vincent, 80009 Amiens (FR)
(74) Mandataire: Valeo Powertrain Systems
(86) Numéro de dépôt international: PCT/EP2017/077475
(87) Numéro de publication internationale: WO 2018/078029

(56) Documents cités:
- WO-A2-2010/081453
- DE-A1- 102007 050 659
- DE-A1- 102010 004 711
- DE-A1- 102010 051 911
- DE-A1- 102012 220 443
- FR-A1- 2 830 589
- FR-A1- 3 015 380
- JP-A- 2000 304 065
- JP-A- 2000 304 065
- JP-A- 2003 262 236
- JP-A- 2003 262 236
- US-A1- 2005 205 379
- US-A1- 2005 205 379
- US-A1- 2008 121 488
- US-A1- 2008 121 488
- US-A1- 2008 142 331

## Description

La présente invention se rapporte au domaine des transmissions pour véhicule automobile. Elle se rapporte notamment à un dispositif de transmission destiné à être disposé, dans la chaine de transmission, entre un moteur thermique et une boîte de vitesses.

Elle concerne notamment un dispositif de transmission pour un véhicule automobile de type hybride dans lequel une machine électrique est également disposée entre le moteur et la boîte de vitesses.

Dans l'état de la technique, il est connu des ensembles de transmission, disposés entre la boîte de vitesses et le moteur thermique et comportant une machine électrique et un embrayage côté moteur permettant d'accoupler en rotation le vilebrequin du moteur thermique au rotor de la machine électrique. Ainsi, il est possible de couper le moteur thermique à chaque arrêt du véhicule et de le redémarrer grâce à la machine électrique. La machine électrique peut également constituer un frein électrique ou apporter un surplus d'énergie au moteur thermique pour l'assister ou éviter que celui-ci ne cale. La machine électrique peut également assurer l'entraînement du véhicule. Lorsque le moteur tourne, la machine électrique joue le rôle d'un alternateur. Un tel ensemble de transmission est notamment divulgué dans le document FR 2 830 589.

Une telle machine électrique peut être en ligne avec l'axe de rotation de l'ensemble de transmission, comme décrit dans le document FR 2 830 589, ou déportée dans un emplacement moins encombré de l'environnement de la chaine de transmission. La machine électrique peut alors être reliée au reste de la chaine de transmission, par exemple par un engrenage, par exemple par une poulie.

Un moteur à explosion présente des acyclismes du fait des explosions se succédant dans les cylindres du moteur, la fréquence des acyclismes variant notamment en fonction du nombre de cylindres et de la vitesse de rotation du moteur. Afin de filtrer les vibrations engendrées par les acyclismes du moteur thermique, il est connu d'intégrer aux ensembles de transmission précités des amortisseurs d'oscillations de torsion à organes élastiques. A défaut de tels amortisseurs, des vibrations pénétrant dans la boîte de vitesses y provoqueraient en fonctionnement des chocs, bruits ou nuisances sonores particulièrement indésirables. De tels amortisseurs sont classiquement disposés entre le moteur thermique et la machine électrique et ils forment avec l'embrayage un dispositif de transmission de couple. Un tel dispositif est par exemple divulgué dans le document FR 3 015 380, au nom de la Demanderesse. D'autres dispositifs de transmission sont connus de US 2008/121488 A1, US 2005/205379 A1, JP 200 304065 A et JP 2003 262236 A.

Dans les développements actuels d'hybridation (« hybridisation » en anglais) des véhicules automobiles, il est demandé de disposer de chaine de transmission intégrant une source d'énergie électrique sans toutefois que cela n'impacte la compacité, notamment axiale, de ladite chaine de transmission. Cette recherche de compacité est à la base de l'invention.

Dans cette logique, le dispositif de transmission de couple entre le moteur thermique et la machine électrique décrit dans le document FR 3 015 380 n'est pas pleinement satisfaisant. En effet, il comprend, sur une même hauteur radiale, décalés axialement, les ressorts d'un amortisseur d'oscillations de torsion et les garnitures d'un embrayage à friction. L'actionneur d'embrayage lui aussi décalé axialement des garnitures de friction complète le dispositif. Cette succession axiale d'éléments de la chaine de transmission ne répond pas aux attentes de compacité du marché actuel. Cette compacité n'est pas non plus obtenue par le document DE 10 2010 051 911 A1. Ce document ne divulgue pas non plus de cloison formant ni une barrière étanche entre un organe de rappel élastique et un embrayage ni ne définissant un réseau d'alimentation d'une chambre d'actionnement d'un organe d'actionnement.

L'invention vise à permettre de bénéficier d'un dispositif de transmission de couple permettant de concilier les exigences de compacité axiale sans toutefois dégrader la filtration des oscillations de torsion.

L'invention y parvient à l'aide d'un dispositif de transmission de couple, notamment pour véhicule automobile, tel que défini par la revendication 1 et la revendication 2 et comprenant :
un élément d'entrée de couple, apte à être couplé en rotation à un vilebrequin d'un moteur thermique,
un élément de sortie de couple, apte à être couplé en rotation à au moins un arbre d'entrée d'une boîte de vitesses et/ou à une machine électrique tournante, l'élément d'entrée de couple étant apte à pivoter par rapport l'élément de sortie de couple autour d'un axe de rotation,
au moins un organe de rappel élastique agissant à l'encontre de la rotation de l'élément de sortie par rapport à l'élément d'entrée,
un embrayage, accouplant sélectivement et par friction les éléments d'entrée et de sortie,
un élément intermédiaire agencé entre l'organe de rappel élastique et l'embrayage pour transmettre le couple, et
un organe d'actionnement de l'embrayage,
l'organe de rappel élastique, l'embrayage et l'organe d'actionnement se succèdent radialement.

Cet enchainement permet d'empiler les éléments radialement de sorte que l'on dispose d'un dispositif compact axialement. Cet enchainement permet donc de limiter l'impact du dispositif sur l'encombrement axial de la chaine de transmission. Disposer l'organe de rappel élastique le plus à l'extérieur radialement permet d'améliorer sa capacité de filtration.

Au sens de l'invention, la succession radiale se comprend en terme de distance radiale.

Selon l'invention, l'embrayage et l'organe d'actionnement peuvent être empilés radialement en rapprochement de l'axe de rotation. Selon cet aspect, il existe un plan perpendiculaire à l'axe de rotation qui coupe à la fois l'embrayage et l'organe d'actionnement de celui-ci. Cette disposition particulière participe à la compacité du dispositif.

Dans une disposition encore plus particulière, l'organe de rappel élastique, l'embrayage et l'organe d'actionnement peuvent être empilés radialement en rapprochement de l'axe de rotation. Selon cet aspect, il existe un plan perpendiculaire à l'axe de rotation qui coupe à la fois, l'organe de rappel élastique, l'embrayage et l'organe d'actionnement de celui-ci.

Une telle disposition permet de disposer les fonctions de filtration et de liaison sélective dans un même espace axial ce qui participe à la compacité du dispositif.

Selon l'invention, l'embrayage comprend:
- un porte-disque d'entrée solidaire en rotation de l'élément intermédiaire,
- un porte-disque de sortie solidaire en rotation de l'élément de sortie,
- un ensemble multidisque comprenant au moins un disque de friction solidaire en rotation de l'un des porte-disques d'entrée et de sortie, au moins deux plateaux respectivement disposés de part et d'autre de chaque disque de friction, solidaires en rotation de l'autre des porte-disques d'entrée et de sortie et des garnitures de friction disposées entre les plateaux et un disque de friction, l'embrayage décrivant une position débrayée et une position embrayée dans laquelle lesdits plateaux et le disque de friction pincent les garnitures de friction de manière à transmettre un couple entre le porte-disque d'entrée et le porte-disque de sortie.

Les garnitures peuvent être fixées sur les disques de friction, notamment par collage, notamment par rivetage, notamment par surmoulage. En variante, les garnitures sont fixées sur les plateaux.

Chaque porte-disque peut synchroniser en rotation l'ensemble des plateaux ou l'ensemble des disques de friction. Les portes-disques peuvent comporter une jupe cylindrique sur lesquelles sont montées les plateaux et les disques de friction.

Les plateaux et les disques peuvent coopérer avec les portes-disques selon une de leur périphérie radiale par complémentarité de forme. Les jupes cylindriques, les plateaux et les disques de friction peuvent par exemple être cannelés.

Selon un aspect non revendiqué, les plateaux peuvent être solidaires en rotation du porte-disque d'entrée et les disques de friction peuvent être solidaires du porte-disque de sortie. En variante, les plateaux peuvent être solidaires en rotation du porte-disque de sortie. Les disques peuvent être solidaires en rotation du porte-disque d'entrée.

Selon un aspect non revendiqué, les plateaux peuvent être radialement à l'intérieur de la jupe cylindrique du porte-disque d'entrée ou de sortie avec lequel ils sont solidaires en rotation. Les disques peuvent être radialement à l'extérieur de la jupe cylindrique du du porte-disque d'entrée ou de sortie avec lequel ils sont solidaires en rotation. En variante, les plateaux peuvent être radialement à l'extérieur de la jupe cylindrique du porte-disque d'entrée ou de sortie avec lequel ils sont solidaires en rotation. Les disques peuvent être radialement à l'intérieur de la jupe cylindrique du porte-disque d'entrée ou de sortie avec lequel ils sont solidaires en rotation.

L'embrayage peut être de type humide ou sec. De préférence, l'embrayage comporte entre 2 et 7 disques de friction, de préférence 4 disques de friction.

Un tel embrayage multi-disques permet de limiter la hauteur radiale à laquelle il doit être disposé et de limiter son étendu axial. Cela permet de loger l'embrayage dans un espace intérieur à l'organe de rappel élastique.

Selon un autre aspect de l'invention, le dispositif peut comprendre un organe de transmission de force mobile axialement pour transmettre l'effort d'actionnement de l'organe d'actionnement vers l'embrayage, un organe de maintien en position débrayée étant interposé entre l'élément intermédiaire et l'organe de transmission de force.

L'embrayage peut donc être de type « normalement ouvert ».

L'organe de transmission de force peut exercer un effort axial sur l'ensemble multidisque pour déplacer les plateaux vers les disques, notamment sur un plateau d'extrémité de l'ensemble multidisque. L'actionnement est ainsi de type « poussé ».

L'organe de transmission de force peut présenter une extrémité radiale extérieure recourbée définissant une surface d'appui pour exercer l'effort axial sur l'ensemble multidisque. L'organe de transmission de force peut présenter une extrémité radiale intérieure avec lequel il coopère avec le reste de l'organe d'actionnement.

Cette surface d'appui peut venir en appui sur le plateau d'extrémité de l'ensemble multidisque. La surface d'appui peut être continue. L'extrémité radiale extérieure peut être une couronne continue de sorte que la surface d'appui est continue. L'extrémité radiale extérieure peut comporter une pluralité de doigts d'extension axiale et reparties autour de l'axe de sorte que la surface d'appui est discontinue.

Selon un aspect non revendiqué, chaque doigt de l'organe de transmission de force peut passer au travers d'ouvertures ménagées dans l'élément intermédiaire pour venir en contact de l'ensemble multidisque. Cela permet de disposer l'embrayage et son actionneur de part et d'autre de l'élément intermédiaire.

L'organe de transmission de force peut définir un espace intérieur dans lequel est disposé, au moins en partie, l'organe d'actionnement. Une telle forme permet de ne pas avoir à décaler axialement l'embrayage et son organe d'actionnement.

L'organe de transmission de force peut présenter trois coudes entre lesquelles sont interposées des portions planes.

L'organe de maintien peut être interposé entre deux portions planes de l'élément intermédiaire et de l'organe de transmission de force.

L'organe de maintien peut être une rondelle élastique, notamment une rondelle de type Belleville.

Selon un premier mode d'actionnement non couvert par l'invention, l'organe d'actionnement peut comprendre une chambre d'actionnement. L'organe de transmission de force peut être déplacé au moyen de cette chambre d'actionnement délimitée en partie par ledit organe. Cet organe d'actionnement est aussi appelé actionneur de type « piston ».

Dans ce mode d'actionnement, l'organe d'actionnement peut être solidaire en rotation de l'élément intermédiaire.

La chambre d'actionnement peut être étanche et remplie d'huile. L'organe de transmission de force peut être déplacé axialement par variation de pression d'huile dans la chambre d'actionnement.

Le contour de la chambre d'actionnement peut être complété par un couvercle de chambre d'actionnement solidaire en rotation de l'organe de transmission de force et fixe axialement de sorte que la chambre et l'huile qu'elle contient sont en rotation.

Associée à la chambre d'actionnement, l'organe d'actionnement peut comprendre une chambre de compensation délimitée par l'organe de transmission de force et par un couvercle d'équilibrage solidaire en rotation dudit l'organe de transmission. Cette chambre peut également être étanche et remplie d'huile. Le couvercle d'équilibrage peut être défini par l'élément intermédiaire.

L'organe de transmission de force peut former une barrière entre les deux chambres. La chambre de compensation est destinée à s'opposer aux effets liés à la pression d'huile hydrodynamique de la chambre d'actionnement sur l'organe de transmission. L'organe de transmission de force peut ainsi être déplacé axialement par variation de pression d'huile relative des chambres d'actionnement et de compensation.

Les positions embrayée et débrayée de l'embrayage peuvent être associées respectivement à une position axiale du piston dite « embrayée » et à une pression fluidique relative dite « embrayée » respectivement à une position axiale du piston dite « débrayée » et à une pression fluidique relative dite « débrayée ».

L'organe de transmission de force, le couvercle d'actionnement et le couvercle d'équilibrage peuvent être solidaires en rotation par l'intermédiaire d'une portion de moyeu, notamment de forme cylindrique, de l'élément intermédiaire disposée radialement à l'intérieur et complétant les contours des deux chambres. La portion de moyeu peut porter radialement les couvercles et l'organe de transmission de force.

Selon l'invention , l'organe d'actionnement comprend un piston annulaire monté coulissant axialement à l'extérieur d'un tube interne, le piston et le tube formant une chambre d'actionnement. L'organe d'actionnement comporte également une butée tournante portée par le piston et coopérant avec l'organe de transmission de force. Cet organe d'actionnement est aussi appelé actionneur de type « CSC» ( « Concentric Slave Cylinder » en anglais). La chambre d'actionnement peut être étanche et remplie d'huile.

Dans ce mode d'actionnement, le piston et le tube sont fixes en rotation de sorte que la chambre d'actionnement et l'huile ne tourne pas.

Selon un aspect non revendiqué, la butée tournante peut être un palier, notamment un palier à roulement. Le palier à roulement peut comporter une bague intérieure fixée au piston, une bague extérieure en appui contre l'organe de transmission de force et des corps roulants interposés entre la bague intérieure et la bague extérieure. De préférence, les corps roulants peuvent être des billes.

Le piston peut être de révolution autour de l'axe de rotation.

Selon un aspect de l'invention, le piston peut présenter une forme en « U », notamment dans un plan comprenant l'axe de rotation du dispositif.

Un tel piston permet d'agir sur l'organe de transmission de force radialement à l'extérieur de la chambre d'actionnement de sorte que l'actionneur est extrêmement compact.

Selon cet aspect de l'invention, les branches du « U » peuvent encadrer radialement le contour de la chambre d'actionnement.

Selon cet aspect de l'invention, la butée tournante peut être disposée radialement à l'extérieur de la chambre d'actionnement. Il existe au moins un plan perpendiculaire à l'axe de rotation qui coupe la chambre d'actionnement et la butée tournante.

Les formes du piston et/ou de l'organe d'actionnement étant ainsi choisies de sorte que l'embrayage et son actionneur puissent s'empiler radialement ce qui contribue à la compacité axiale du dispositif.

Dans ce mode de réalisation, les pressions fluidiques associées aux positions « embrayée » et « débrayée » sont les pressions de la chambre d'actionnement et non des pressions relatives entre deux chambres.

Selon l'invention, le dispositif comprend un carter apte à être fixé sur la boîte de vitesses, notamment sur le carter de boîte de vitesses. Ce carter comprend une cloison d'extension radiale. La cloison définit un réseau d'alimentation en fluide de l'organe d'actionnement. Le carter peut être fixe en rotation et en translation.

La cloison radiale, notamment son extrémité intérieure, peut comporter des perçages pour la connexion de la chambre d'actionnement, et éventuellement de la chambre de compensation, au réseau d'alimentation.

L'extrémité intérieure de la cloison peut comporter une portion cylindrique de sorte que la cloison radiale peut présenter un profil sensiblement en forme de « L ».

Selon le premier mode de réalisation d'actionnement, la portion de moyeu peut comporter des fentes en regard des perçages dans au moins une position angulaire de l'organe d'actionnement. Les perçages peuvent déboucher radialement.

Selon le second mode d'actionnement, le tube interne peut être formé par l'extrémité intérieure de la cloison radiale. Le perçage peut déboucher axialement dans la chambre d'actionnement.

Selon l'invention, la cloison forme une barrière étanche entre l'organe de rappel élastique et l'embrayage.

Une telle cloison permet de pouvoir disposer d'un embrayage humide sans que l'huile de refroidissement de l'embrayage humide ne vienne polluer l'environnement de l'organe de rappel élastique.

La cloison peut présenter un renfoncement axial au niveau de l'embrayage permettant d'augmenter l'espace disponible pour l'embrayage, notamment pour l'ensemble multidisque.

Selon un aspect de l'invention, l'élément intermédiaire peut être supporté radialement par le carter, notamment par la cloison, par l'intermédiaire d'au moins un palier d'appui radial.

Le palier peut être à roulement, le palier peut être à aiguilles.

Le palier d'appui radial peut être disposé radialement à l'intérieur de l'organe d'actionnement, notamment radialement à l'intérieur de la chambre d'actionnement. Cet agencement permet de disposer les fonctions support et actionnement sur un même espace radial pour être compact axialement.

En particulier, dans le premier mode de réalisation, l'élément intermédiaire peut être porté radialement par l'intermédiaire d'au moins deux paliers d'appui radial, notamment à aiguilles, montée sur la portion de moyeu. Les paliers peuvent être disposés axialement de part et d'autre des perçages.

L'élément d'entrée peut comporter deux rondelles de guidages encadrant axialement une pluralité de d'organes de rappel élastiques, tel que des ressorts courbes. Les rondelles de guidage peuvent se rapprocher localement entre les ressorts pour définir des zones d'appuis circonférentielles pour la coopération avec lesdits ressorts.

L'élément d'entrée peut être centré sur l'élément de sortie par l'intermédiaire d'un roulement à aiguilles.

L'élément d'entrée, notamment l'une des rondelles de guidages peut comporter une pluralité de trous pour le passage de rivets de fixation du vilebrequin. Sur cette même rondelle de guidage, radialement à l'extérieur, une couronne de démarrage peut être prévue.

L'élément intermédiaire peut comprendre un voile dont la périphérie radialement extérieure comporte des crans qui s'interposent circonférentiellement entre les ressorts. L'élément intermédiaire peut former un ensemble solidaire en rotation, notamment solidaire en rotation et en translation. Le voile et la portion de moyeu peuvent être directement reliés.

L'élément de sortie forme une entrée en couple d'une machine électrique. L'élément de sortie peut former une entrée en couple d'un double embrayage et d'une machine électrique tournante.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux figures annexées.
la figure 1 est une vue en coupe axiale d'un exemple du dispositif selon l'invention dans un premier mode d'actionnement,
la figure 2 est une vue en coupe axiale selon un deuxième exemple du dispositif dans le premier mode d'actionnement, et
la figure 3 est une vue en coupe axiale selon un troisième exemple du dispositif selon l'invention dans un second mode d'actionnement non couvert par l'invention.

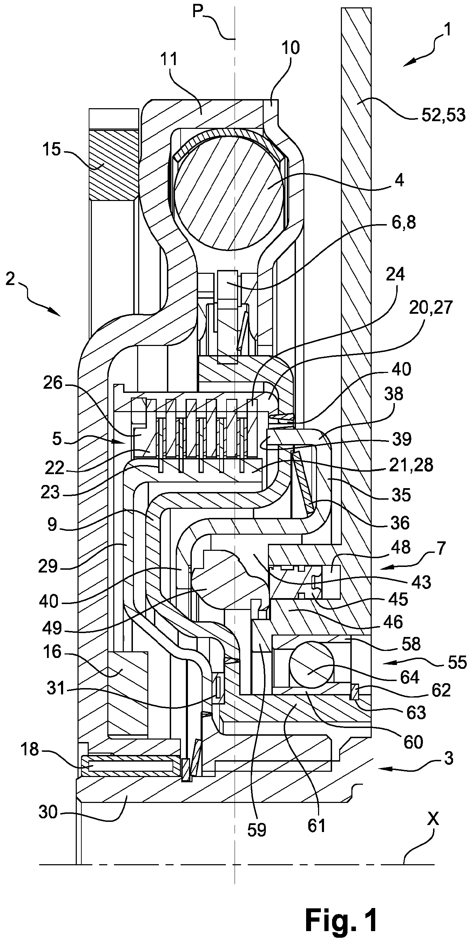

En relation avec la figure 1, on observe un dispositif de transmission de couple 1 comprenant :
un élément d'entrée de couple 2, apte à être couplé en rotation à un vilebrequin d'un moteur thermique (non représenté),
un élément de sortie de couple 3, apte à être couplé en rotation à au moins un arbre d'entrée d'une boîte de vitesses et/ou à une machine électrique tournante, l'élément d'entrée 2 étant apte à pivoter par rapport l'élément de sortie 3 autour d'un axe de rotation X,
une pluralité d'organes de rappel élastique 4 agissant à l'encontre de la rotation de l'élément de sortie 3 par rapport à l'élément d'entrée 2,
un embrayage 5, accouplant sélectivement et par friction les éléments d'entrée et de sortie 2, 3,
un élément intermédiaire 6, solidaire en rotation et en translation, agencé entre les organes de rappel élastique 4 et l'embrayage 5 pour transmettre le couple, et
un organe d'actionnement de l'embrayage 7.

Dans l'exemple considéré, l'élément d'entrée comporte deux rondelles de guidage, une rondelle de guidage avant 10 et une rondelle de guidage arrière 11. La rondelle de guidage 11 arrière est axialement disposée du côté du moteur thermique.

Dans l'exemple considéré, les organes de rappel élastique 4 sont des ressorts courbes et ils sont encadrés par les rondelles de guidage 10, 11. Les rondelles de guidage sont fixées ensemble, par exemple par soudage, radialement à l'extérieur des ressorts 4.

Dans l'exemple considéré, il est prévu une ou plusieurs gouttières qui s'interposent entre les rondelles de guidage et les ressorts lorsque ceux-ci sont centrifugés. Ces gouttières, par exemple en métal, épousent la forme des ressorts 4 et permettent d'en limiter l'usure.

Les rondelles de guidage 10, 11 peuvent se rapprocher localement entre les ressorts 4 pour définir des zones d'appuis circonférentielles pour la coopération avec lesdits ressorts. Ces zones d'appuis permettant de transmettre le couple entre l'élément d'entrée et les ressorts.

Une couronne de démarrage 15 est également fixée sur la rondelle de guidage arrière 11 au niveau de sa périphérie radialement extérieure. La rondelle de guidage arrière comporte aussi une pluralité de trous pour le passage de rivets ou de vis de fixation du vilebrequin. Ces vis 16 sont réparties tout autour de l'axe X.

Enfin, l'extrémité radialement intérieure de la rondelle de guidage arrière 11 comprend une portion d'extension axiale pour coopérer avec l'élément de sortie par l'intermédiaire d'un roulement de centrage à aiguilles 18 afin d'assurer le centrage de l'élément d'entrée 2 sur l'élément de sortie 3.

Dans l'exemple considéré, l'élément intermédiaire 6 comprend un voile 8 dont la périphérie radialement extérieure comporte des crans (non visible dans le plan de coupe des figures) qui s'interposent circonférentiellement entre les ressorts. Ces crans définissent des zones d'appuis circonférentielles permettant de transmettre le couple entre les ressorts et l'élément de sortie.

Toujours dans l'exemple considéré à la figure 1, l'élément de sortie 3 peut former une entrée en couple d'un embrayage, en particulier d'un double embrayage et/ou d'une machine électrique tournante.

Dans l'exemple considéré, l'embrayage 5 comprend:
- un porte-disque d'entrée 20 solidaire en rotation de l'élément intermédiaire 6, notamment d'une portion de connexion 9 de l'élément intermédiaire 6,
- un porte-disque de sortie 21 solidaire en rotation de l'élément de sortie 3, et
- un ensemble multidisque 22 comprenant plusieurs disques de friction 23 solidaires en rotation du porte-disque de sortie 21, plusieurs plateaux 24 disposés de part et d'autre de chaque disque de friction 23, solidaires en rotation du porte-disque d'entrée 20 et des garnitures de friction 25 disposées entre les plateaux 24 et les disques de friction 23. L'embrayage 5 décrit une position débrayée et une position embrayée dans laquelle les plateaux 24 et les disques de friction 23 pincent les garnitures de friction de manière à transmettre un couple entre le porte-disque d'entrée 20 et le porte-disque de sortie 21.

Les garnitures 25 sont fixées axialement de part et d'autres de chacun des disques de friction 23. Les garnitures 25 sont par exemple collées, par exemple rivetées, par exemple surmoulées. En variante, les garnitures peuvent être fixées sur les plateaux.

Le porte-disque d'entrée 20 comporte également un élément de réaction 26 fixe axialement contre lequel est serré l'ensemble multidisque 22 en position embrayée. L'élément de réaction 26 prend la forme d'une couronne annulaire continue autour de l'axe X.

Les porte-disques 20, 21 synchronisent en rotation respectivement l'ensemble des plateaux et l'ensemble des disques de friction. Les portes-disques comportent chacun une jupe cylindrique sur lesquelles sont montées les plateaux et les disques de friction.

Dans l'exemple considéré à la figure 1, les plateaux 24 sont radialement à l'intérieur de la jupe cylindrique 27 du porte-disque d'entrée et ils sont solidaires en rotation par complémentarité de forme, par exemple par des cannelures.

Dans l'exemple considéré, la jupe cylindrique 27 est solidaire de l'élément intermédiaire 6, notamment de sa portion de connexion 9, par soudage.

Les disques de friction 23 sont, quant à eux, radialement à l'extérieur de la jupe cylindrique 28 du porte-disque de sortie et ils sont solidaires en rotation par complémentarité de forme, par exemple par des cannelures.

Dans l'exemple considéré à la figure 1, l'embrayage peut être de type sec. De préférence, l'embrayage comporte entre 2 et 7 disques de friction, de préférence 4 disques de friction.

Dans l'exemple considéré, la jupe cylindrique de l'élément 28 de sortie est prolongée radialement vers l'intérieur par une paroi radial 29 de l'élément de sortie jusqu'à venir en prise avec un moyeu 30 de l'élément de sortie 3. Ce moyeu 30 porte le roulement de centrage 18.

Dans l'exemple considéré, un roulement, ici à aiguilles 31, est prévu entre la paroi 29 et l'élément intermédiaire 6 pour assurer le guidage axial de l'élément de sortie.

Toujours dans l'exemple considéré à la figure 1, le dispositif 1 comprend également un organe de transmission de force 35 mobile axialement pour transmettre l'effort d'actionnement dudit organe d'actionnement vers l'embrayage et un organe de maintien 36 en position débrayée, ici une rondelle élastique, interposé entre l'élément intermédiaire 6 et l'organe de transmission de force 35. L'embrayage 5 est donc de type « normalement ouvert ».

La rondelle élastique 36 est interposée entre deux portions planes de l'élément intermédiaire 6 et de l'organe de transmission de force 35. L'organe élastique 36 agit à l'encontre de l'organe d'actionnement 7 sur l'organe de transmission de force 35.

L'organe de transmission de force 35 présente une extrémité radiale extérieure 38 recourbée définissant une surface d'appui pour exercer l'effort axial sur un plateau d'extrémité de l'ensemble multidisque 22 pour déplacer les plateaux vers les disques. L'actionnement est ainsi de type « poussé ».

L'extrémité radiale 38 peut comporter une pluralité de doigts 39 d'extension axiale et reparties autour de l'axe de sorte que la surface d'appui est discontinue. Chaque doigt 39 peut passer au travers d'une ouverture 40 ménagée dans l'élément intermédiaire 6, en particulier dans la potion intermédiaire 9, pour venir en contact de l'ensemble multidisque 22, l'embrayage et son actionneur étant de part et d'autre de l'élément intermédiaire.

L'organe de transmission de force 35 définit un espace intérieur 43 dans lequel est disposé, au moins en partie, l'organe d'actionnement 7. Cette espace intérieur est formé par un renfoncement 44 de l'organe de transmission de force 35. L'élément intermédiaire 6 et la paroi radiale 29 reproduisent la forme de ce renfoncement axial pour permettre un débattement axial suffisant au fonctionnement de l'organe d'actionnement 7.

L'organe de transmission de force 35 présente trois coudes reliés par des portions planes.

L'organe de transmission de force 35 présente une extrémité radiale intérieure 40 avec lequel il coopère avec l'organe d'actionnement, comme on le verra par la suite.

Dans l'exemple considéré à la figure 1, l'organe d'actionnement 7 est dans un second mode d'actionnement.

L'organe d'actionnement 7 comprend un piston annulaire 45, qui peut être de révolution autour de l'axe X, monté coulissant axialement à l'extérieur d'un tube interne 46, le piston et le tube formant une chambre d'actionnement 48. L'organe d'actionnement comporte également une butée tournante 49 portée par le piston et coopérant avec l'organe de transmission de force 35. Cet organe d'actionnement est aussi appelé actionneur de type « CSC» (« Concentric Slave Cylinder » en anglais). La chambre d'actionnement 48 est étanche et remplie d'huile.

Dans l'exemple considéré, la butée tournante 49 peut être un palier, notamment un palier à roulement. Le palier à roulement peut comporter une bague intérieure fixée au piston, une bague extérieure en appui contre l'organe de transmission de force et des corps roulants interposés entre la bague intérieure et la bague extérieure.

Dans l'exemple considéré, le dispositif 1 comprend aussi un carter 52 apte à être fixé sur la boîte de vitesses, notamment sur le carter de boîte de vitesses. Le carter est fixe en rotation et en translation.

Le carter 52 comprend une cloison 53 d'extension radiale qui comportant une portion cylindrique à son extrémité radialement intérieure de sorte que la cloison radiale peut présenter un profil sensiblement en forme de « L ».

Dans l'exemple considéré à la figure 1, le tube interne 46 est formé par l'extrémité intérieure de la cloison 53.

Dans l'exemple considéré, la cloison 53 définit un réseau d'alimentation en fluide, non représenté, de l'organe d'actionnement 7.

Dans l'exemple considéré, l'extrémité intérieure de la cloison 53, comporte au moins un perçage, non représenté, pour la connexion de la chambre d'actionnement 48 au réseau d'alimentation. Ce perçage peut déboucher axialement dans la chambre d'actionnement 48.

Dans l'exemple considéré, l'élément intermédiaire 6 est supporté radialement par la cloison 53, par l'intermédiaire d'un palier d'appui radial 55, ici un palier à roulement. Le palier d'appui radial 55 peut être disposé radialement à l'intérieur de l'organe d'actionnement 7, en particulier de la chambre d'actionnement 48. Le palier d'appui radial 55 permet de reprendre le poids et le balourd radial de l'embrayage.

Dans l'exemple considéré, le palier d'appui radial 55 comporte une bague externe 58 montée à l'intérieur de la cloison 53 et immobilisée axialement par un épaulement 59 formé par la portion cylindrique de ladite cloison 53, une bague interne 60 montée autour d'une portion de moyeu cylindrique 61 définie par l'extrémité radialement intérieure de l'organe intermédiaire 6 et immobilisée axialement, dans le sens opposé à la bague externe, par un anneau élastique 62, par exemple un jonc d'arrêt ou un « circlip », montée de façon amovible, dans une gorge 63 de la portion cylindrique de l'élément intermédiaire 6. Entre les bagues sont montés des moyens de roulement 64, ici des billes.

Dans l'exemple considéré, l'élément intermédiaire 6 comprend donc, en rapprochement de l'axe X, le voile 8 solidaire en rotation par exemple par cannelures à une portion de connexion 9 qui prend une forme sensiblement identique à celle de l'organe de transmission de force 35. Portion de connexion 9 elle-même fixée, par exemple par soudage, à la portion de moyeu 61.

Dans l'exemple du dispositif 1 tel qu'il vient d'être décrit, les ressorts 4, l'embrayage 5 et l'organe d'actionnement 7 se succèdent radialement. Cet enchaînement permet d'empiler les éléments radialement de sorte que l'on dispose d'un dispositif compact axialement. Les ressorts sont plus éloignés de l'axe X que l'embrayage 5 et l'embrayage 5 est radialement plus éloigné que son organe d'actionnement 7.

En particulier, dans cet exemple de réalisation, les ressorts 4, l'embrayage 5 et l'organe d'actionnement 7 sont empilés radialement en rapprochement de l'axe X. Il existe un plan P perpendiculaire à l'axe X qui coupe à la fois, les ressorts 4, l'embrayage 5 et l'organe d'actionnement 7 de celui-ci. Une telle disposition permet de disposer les fonctions de filtration et de liaison sélective dans un même espace axial ce qui participe à la compacité du dispositif 1.

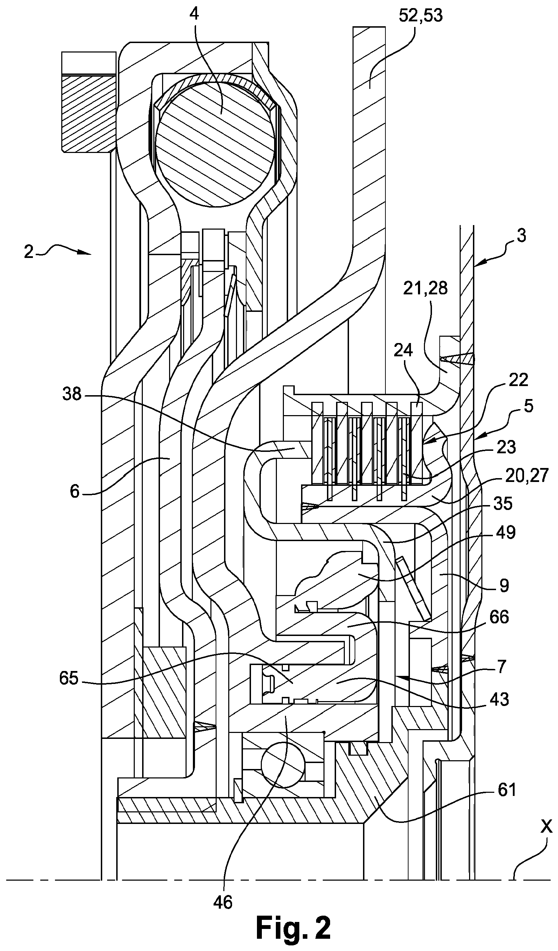

Le deuxième exemple, présenté à la figure 2, diffère en ce que la cloison 53 forme une barrière étanche entre les ressorts 4 et l'embrayage 7.

Une telle cloison 53 permet de pouvoir disposer d'un embrayage humide sans que l'huile de refroidissement de l'embrayage humide ne vienne polluer l'environnement des ressorts.

La cloison 53 présente un renfoncement axial au niveau de l'embrayage 5 permettant d'augmenter l'espace disponible pour l'embrayage 5, notamment pour l'ensemble multidisque 22.

Dans l'exemple de la figure 2, l'embrayage 5 est donc avantageusement de type embrayage humide.

Dans l'exemple considéré, la cloison 53 peut alors définir un autre réseau d'alimentation, comportant notamment une pluralité de canaux, pour le passage d'un fluide de refroidissement de l'embrayage 5, tel que de l'huile de boîte de vitesses, destiné à assurer le refroidissement et la lubrification de l'ensemble multidisque. Les canaux peuvent être équitablement répartis autour de l'axe X.

Dans l'exemple considéré, l'organe d'actionnement 7 et l'organe de transmission de force 35 sont également du côté de l'embrayage par rapport à la cloison 53.

Dans l'exemple considéré, l'élément intermédiaire 6 contourne l'organe d'actionnement 7 et l'organe de transmission de force 35 par l'intérieur pour être fixé sur le porte-disque d'entrée 20 de sorte que l'élément intermédiaire 6 n'interfère pas avec l'organe de transmission de force 35.

Dans l'exemple considéré, l'élément intermédiaire 6 comprend un agencement différent de celui de l'exemple de la figure 1 en ce que le voile 8 s'étend radialement jusqu'à la portion de moyeu 61 et en ce que la portion de connexion 9 n'est donc pas disposée entre le voile 8 et la portion de moyeu 61. En effet, dans l'exemple considéré, la portion de connexion 9 est disposée axialement de l'autre coté de l'organe de transmission de force 35 de sorte qu'il n'est pas nécessaire de ménager d'ouverture dans la surface d'appui sur l'ensemble multidisque 22.

Dans l'exemple considéré, l'extrémité radiale extérieure 38 peut être une couronne continue de sorte que la surface d'appui est continue.

Dans l'exemple considéré, les disques de friction 23 sont solidaires du porte-disque d'entrée 20 et ils sont radialement à l'extérieur de la jupe cylindrique 27 et les plateaux sont solidaires du porte-disque de sortie 21 et ils sont radialement à l'intérieur de la jupe cylindrique 28.

Dans l'exemple considéré, le piston 43 présente une forme en « U », dans le plan de la figure. Un tel piston permet d'agir sur l'organe de transmission de force radialement à l'extérieur de la chambre d'actionnement de sorte que l'actionneur est extrêmement compact.

Les branches du « U » interne 65 et externe 66 encadrent radialement le contour de la chambre d'actionnement. La branche interne 65 est montée coulissante dans le tube interne 46, la branche externe 6 exerce un effort axial orienté dans le même sens que l'effort lié à la pression sur la branche interne 66.

La butée tournante 49 est disposée radialement à l'extérieur de la chambre d'actionnement 48.

Dans l'exemple considéré, l'embrayage 5 et son organe d'actionnement 7 sont empilés radialement en rapprochement de l'axe X.

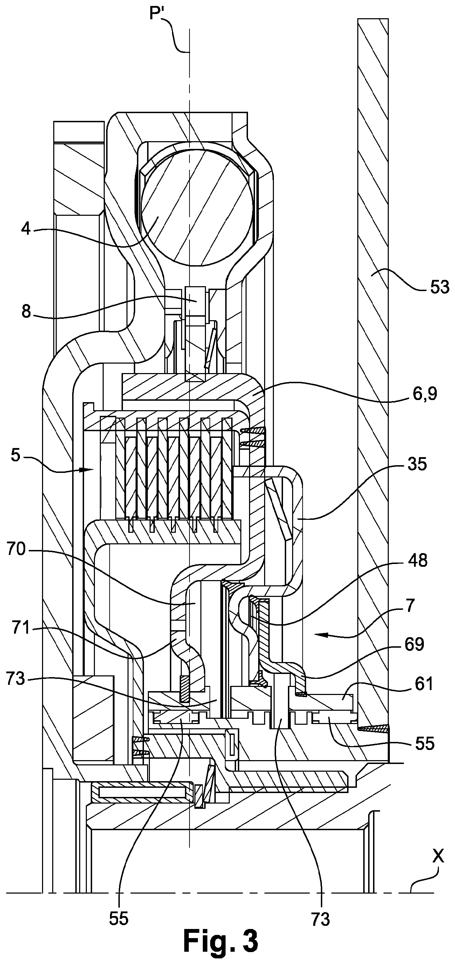

Le troisième exemple, présenté à la figure 3 , diffère de la figure 1 par son mode d'actionnement non couvert par l'invention.

Dans ce mode, défini comme le premier mode d'actionnement, l'organe d'actionnement 7 comprend également la chambre d'actionnement 48. L'organe de transmission de force 35 est déplacé au moyen de cette chambre d'actionnement qui est délimitée en partie par ledit organe 35. Cet organe d'actionnement 7 est aussi appelé actionneur de type « piston ».

Il n'existe pas de piston ni de butée tournante dans ce mode de réalisation dans ce mode d'actionnement.

Dans l'exemple considéré, l'organe d'actionnement 7 est solidaire en rotation de l'élément intermédiaire 6, par l'intermédiaire de la portion de moyeu 61. La chambre d'actionnement 48 est étanche et remplie d'huile.

Dans l'exemple considéré, le contour de la chambre d'actionnement 48 est complété par un couvercle de chambre d'actionnement 69 solidaire en rotation de l'organe de transmission de force 35 par l'intermédiaire de la portion de moyeu 61 et fixe axialement de sorte que la chambre d'actionnement 48 et l'huile qu'elle contient sont en rotation.

Dans l'exemple considéré, associée à la chambre d'actionnement 48, l'organe d'actionnement 7 comprend une chambre de compensation 70, étanche et remplie d'huile, délimitée par l'organe de transmission de force 35 et par un couvercle d'équilibrage 71 solidaire en rotation dudit l'organe de transmission 35. Le couvercle d'équilibrage 71 est ici défini par la portion de connexion 9 de l'élément intermédiaire 6.

Dans l'exemple considéré, l'organe de transmission de force 35 forme une barrière entre les deux chambres 48, 70. La chambre de compensation 70 est destinée à s'opposer aux effets liés à la pression d'huile hydrodynamique de la chambre d'actionnement 48 sur l'organe de transmission 35. L'organe de transmission de force peut ainsi être déplacé axialement par variation de pression d'huile relative des chambres d'actionnement 48 et de compensation 70.

L'organe de transmission de force 35, le couvercle d'actionnement 69 et le couvercle d'équilibrage 71 sont solidaires en rotation par l'intermédiaire de la portion de moyeu 61 de l'élément intermédiaire disposé radialement à l'intérieur et complétant les contours des deux chambres 48, 70. La portion de moyeu 61 peut porter radialement les couvercles et l'organe de transmission de force.

Dans l'exemple considéré, la portion de moyeu 61 comporte des fentes 73 en regard des perçages, non représenté, dans au moins une position angulaire de l'organe d'actionnement 7. Les perçages peuvent déboucher radialement. Les perçages sont définis par la cloison radiale 53 pour la connexion de la chambre d'actionnement 48 et de la chambre de compensation 70, au réseau d'alimentation.

Dans l'exemple considéré, l'élément intermédiaire 6 est porté radialement par l'intermédiaire de deux paliers d'appui radial à aiguilles 55, montée sur la portion de moyeu 61 et disposés axialement de part et d'autre des fentes.

En particulier, dans cet exemple de réalisation, les ressorts 4, l'embrayage 5 et l'organe d'actionnement 7 sont empilés radialement en rapprochement de l'axe X. Il existe un plan P' perpendiculaire à l'axe X qui coupe à la fois, les ressorts 4, l'embrayage 5 et l'organe d'actionnement 7 de celui-ci. Une telle disposition permet de disposer les fonctions de filtration et de liaison sélective dans un même espace axial ce qui participe à la compacité du dispositif 1.

## Revendications

1. Dispositif (1) de transmission de couple, notamment pour véhicule automobile, comprenant :
- un élément d'entrée de couple (2), apte à être couplé en rotation à un vilebrequin d'un moteur à combustion interne,
- un élément de sortie de couple (3), apte à être couplé en rotation à au moins un arbre d'entrée d'une boîte de vitesses et/ou à une machine électrique tournante, l'élément d'entrée de couple étant apte à pivoter par rapport l'élément de sortie de couple autour d'un axe de rotation (X),
- au moins un organe de rappel élastique (4) agissant à l'encontre de la rotation de l'élément de sortie par rapport à l'élément d'entrée,
- un embrayage (5), accouplant sélectivement et par friction les éléments d'entrée et de sortie,
- un élément intermédiaire (6) agencé entre l'organe de rappel élastique et l'embrayage pour transmettre le couple, et
- un organe d'actionnement (7) de l'embrayage, tel que l'organe de rappel élastique, l'embrayage et l'organe d'actionnement se succèdent radialement, l'embrayage (5) comprenant:
- un porte-disque d'entrée (20) solidaire en rotation de l'élément intermédiaire,
- un porte-disque de sortie (21) solidaire en rotation de l'élément de sortie,
- un ensemble multidisque (22) comprenant au moins un disque de friction (23) solidaire en rotation de l'un des porte-disques d'entrée et de sortie, au moins deux plateaux (24) respectivement disposés de part et d'autre de chaque disque de friction, solidaires en rotation de l'autre des porte-disques d'entrée et de sortie et des garnitures de friction (25) disposées entre les plateaux et un disque de friction, l'embrayage (5) décrivant une position débrayée et une position embrayée dans laquelle lesdits plateaux et le disque de friction pincent les garnitures de friction de manière à transmettre un couple entre le porte-disque d'entrée (20) et le porte-disque de sortie (21),
l'organe d'actionnement (7) comprend un piston annulaire (45) monté coulissant axialement à l'extérieur d'un tube interne (46), le piston et le tube formant une chambre d'actionnement (48), et une butée tournante (49) portée par le piston et coopérant avec l'organe de transmission de force,
**caractérisé en ce que** l'embrayage (5) et l'organe d'actionnement (7) étant empilés radialement en rapprochement de l'axe de rotation X.

2. Dispositif (1) de transmission de couple, notamment pour véhicule automobile, comprenant :
- un élément d'entrée de couple (2), apte à être couplé en rotation à un vilebrequin d'un moteur à combustion interne,
- un élément de sortie de couple (3), apte à être couplé en rotation à au moins un arbre d'entrée d'une boîte de vitesses et/ou à une machine électrique tournante, l'élément d'entrée de couple étant apte à pivoter par rapport l'élément de sortie de couple autour d'un axe de rotation (X),
- au moins un organe de rappel élastique (4) agissant à l'encontre de la rotation de l'élément de sortie par rapport à l'élément d'entrée,
- un embrayage (5), accouplant sélectivement et par friction les éléments d'entrée et de sortie,
- un élément intermédiaire (6) agencé entre l'organe de rappel élastique et l'embrayage pour transmettre le couple, et
- un organe d'actionnement (7) de l'embrayage, tel que l'organe de rappel élastique, l'embrayage et l'organe d'actionnement se succèdent radialement, l'embrayage (5) comprenant :
- un porte-disque d'entrée (20) solidaire en rotation de l'élément intermédiaire,
- un porte-disque de sortie (21) solidaire en rotation de l'élément de sortie,
- un ensemble multidisque (22) comprenant au moins un disque de friction (23) solidaire en rotation de l'un des porte-disques d'entrée et de sortie, au moins deux plateaux (24) respectivement disposés de part et d'autre de chaque disque de friction, solidaires en rotation de l'autre des porte-disques d'entrée et de sortie et des garnitures de friction (25) disposées entre les plateaux et un disque de friction, l'embrayage (5) décrivant une position débrayée et une position embrayée dans laquelle lesdits plateaux et le disque de friction pincent les garnitures de friction de manière à transmettre un couple entre le porte-disque d'entrée (20) et le porte-disque de sortie (21),
l'organe d'actionnement (7) comprend un piston annulaire (45) monté coulissant axialement à l'extérieur d'un tube interne (46), le piston et le tube formant une chambre d'actionnement (48), et une butée tournante (49) portée par le piston et coopérant avec l'organe de transmission de force,
l'élément de sortie (3) formant une entrée en couple d'une machine électrique tournante,
**caractérisé en ce que** le dispositif comprend un carter (52) apte à être fixé sur la boîte de vitesses, le carter comprenant une cloison (53) d'extension radiale, la cloison définissant au moins un réseau d'alimentation de la chambre d'actionnement (48) ; la cloison (53) formant une barrière étanche entre l'organe de rappel élastique (4) et l'embrayage (5).

3. Dispositif (1) selon la revendication 2, l'embrayage (5) et l'organe d'actionnement (7) étant empilés radialement en rapprochement de l'axe de rotation X.

4. Dispositif (1) selon l'une des revendications précédentes, l'organe de rappel élastique (4), l'embrayage (5) et l'organe d'actionnement (7) étant empilés radialement en rapprochement de l'axe de rotation X.

5. Dispositif (1) selon la revendication 2, le piston (45) présentant une forme en U.

6. Dispositif (1) selon l'une quelconques des revendication 2 et 5, l'élément intermédiaire (6) étant supporté radialement par le carter (52), par l'intermédiaire d'au moins un palier d'appui radial (55).

7. Dispositif (1) selon la revendication précédente, le palier d'appui radial (55) étant radialement disposé à l'intérieur de l'organe d'actionnement (7).

8. Dispositif (1) selon la revendication 1 prise seule ou en combinaison avec l'une des revendications 3 à 7, l'élément de sortie (3) formant une entrée en couple d'un double embrayage et/ou d'une machine électrique tournante.

9. Dispositif (1) selon la revendication 2 prise seule ou en combinaison avec l'une quelconque des revendications 3 à 7, l'élément de sortie (3) formant une entrée en couple d'un double embrayage.

## Patentansprüche

1. Vorrichtung (1) zur Drehmomentübertragung, insbesondere für ein Kraftfahrzeug, umfassend:
- ein Drehmomenteingangselement (2), das mit einer Kurbelwelle einer Brennkraftmaschine drehgekoppelt werden kann,
- ein Drehmomentausgangselement (3), das mit wenigstens einer Antriebswelle eines Getriebes und/oder mit einer rotierenden elektrischen Maschine drehgekoppelt werden kann, wobei das Drehmomenteingangselement in Bezug auf das Drehmomentausgangselement um eine Drehachse (X) schwenkbar ist,
- wenigstens ein elastisches Rückholorgan (4), das der Drehung des Ausgangselements in Bezug auf das Eingangselement entgegenwirkt,
- eine Kupplung (5), welche das Eingangs- und das Ausgangselement selektiv und durch Reibung koppelt,
- ein Zwischenelement (6), das zwischen dem elastischen Rückholorgan und der Kupplung angeordnet ist, um das Drehmoment zu übertragen, und
- ein Betätigungsorgan (7), derart, dass das elastische Rückholorgan, die Kupplung und das Betätigungsorgan radial aufeinanderfolgen,
- wobei die Kupplung (5) umfasst:
- einen Eingangslamellenträger (20), der mit dem Zwischenelement drehfest verbunden ist,
- einen Ausgangslamellenträger (21), der mit dem Ausgangselement drehfest verbunden ist,
- eine Lamellenanordnung (22), die wenigstens eine Reibscheibe (23), die mit einem von dem Eingangs- und dem Ausgangslamellenträger drehfest verbunden ist, wenigstens zwei Platten (24), die jeweils beiderseits jeder Reibscheibe angeordnet sind und mit dem anderen von dem Eingangs- und dem Ausgangslamellenträger drehfest verbunden sind, und Reibbeläge (25), die zwischen den Platten und einer Reibscheibe angeordnet sind, umfasst, wobei die Kupplung (5) eine ausgekuppelte Position und eine eingekuppelte Position, in welcher die Platten und die Reibscheibe die Reibbeläge so festklemmen, dass ein Drehmoment zwischen dem Eingangslamellenträger (20) und dem Ausgangslamellenträger (21) übertragen wird, einnimmt,
- wobei das Betätigungsorgan (7) einen ringförmigen Kolben (45) umfasst, der axial gleitend außerhalb eines inneren Rohres (46) angebracht ist, wobei der Kolben und das Rohr eine Betätigungskammer (48) bilden, und einen drehenden Anschlag (49), der von dem Kolben getragen wird und mit dem Kraftübertragungsorgan zusammenwirkt,
- **dadurch gekennzeichnet, dass** die Kupplung (5) und das Betätigungsorgan (7) in Richtung zur Drehachse X hin radial gestapelt sind.

2. Vorrichtung (1) zur Drehmomentübertragung, insbesondere für ein Kraftfahrzeug, umfassend:
- ein Drehmomenteingangselement (2), das mit einer Kurbelwelle einer Brennkraftmaschine drehgekoppelt werden kann,
- ein Drehmomentausgangselement (3), das mit wenigstens einer Antriebswelle eines Getriebes und/oder mit einer rotierenden elektrischen Maschine drehgekoppelt werden kann, wobei das Drehmomenteingangselement in Bezug auf das Drehmomentausgangselement um eine Drehachse (X) schwenkbar ist,
- wenigstens ein elastisches Rückholorgan (4), das der Drehung des Ausgangselements in Bezug auf das Eingangselement entgegenwirkt,
- eine Kupplung (5), welche das Eingangs- und das Ausgangselement selektiv und durch Reibung koppelt,
- ein Zwischenelement (6), das zwischen dem elastischen Rückholorgan und der Kupplung angeordnet ist, um das Drehmoment zu übertragen, und
- ein Betätigungsorgan (7), derart, dass das elastische Rückholorgan, die Kupplung und das Betätigungsorgan radial aufeinanderfolgen, wobei die Kupplung (5) umfasst:
- einen Eingangslamellenträger (20), der mit dem Zwischenelement drehfest verbunden ist,
- einen Ausgangslamellenträger (21), der mit dem Ausgangselement drehfest verbunden ist,
- eine Lamellenanordnung (22), die wenigstens eine Reibscheibe (23), die mit einem von dem Eingangs- und dem Ausgangslamellenträger drehfest verbunden ist, wenigstens zwei Platten (24), die jeweils beiderseits jeder Reibscheibe angeordnet sind und mit dem anderen von dem Eingangs- und dem Ausgangslamellenträger drehfest verbunden sind, und Reibbeläge (25), die zwischen den Platten und einer Reibscheibe angeordnet sind, umfasst, wobei die Kupplung (5) eine ausgekuppelte Position und eine eingekuppelte Position, in welcher die Platten und die Reibscheibe die Reibbeläge so festklemmen, dass ein Drehmoment zwischen dem Eingangslamellenträger (20) und dem Ausgangslamellenträger (21) übertragen wird, einnimmt,
- wobei das Betätigungsorgan (7) einen ringförmigen Kolben (45) umfasst, der axial gleitend außerhalb eines inneren Rohres (46) angebracht ist, wobei der Kolben und das Rohr eine Betätigungskammer (48) bilden, und einen drehenden Anschlag (49), der von dem Kolben getragen wird und mit dem Kraftübertragungsorgan zusammenwirkt,
- wobei das Ausgangselement (3) einen Drehmomenteingang einer rotierenden elektrischen Maschine bildet,
- **dadurch gekennzeichnet, dass** die Vorrichtung ein Gehäuse (52) umfasst, das am Getriebe befestigbar ist, wobei das Gehäuse eine sich radial erstreckende Trennwand (53) umfasst, wobei die Trennwand wenigstens ein Versorgungsnetz für die Betätigungskammer (48) definiert; wobei die Trennwand (53) eine dichte Barriere zwischen dem elastischen Rückholorgan (4) und der Kupplung (5) bildet.

3. Vorrichtung (1) nach Anspruch 2, wobei die Kupplung (5) und das Betätigungsorgan (7) in Richtung zur Drehachse X hin radial gestapelt sind.

4. Vorrichtung (1) nach einem der vorhergehenden Ansprüche, wobei das elastische Rückholorgan (4), die Kupplung (5) und das Betätigungsorgan (7) in Richtung zur Drehachse X hin radial gestapelt sind.

5. Vorrichtung (1) nach Anspruch 2, wobei der Kolben (45) eine U-Form aufweist.

6. Vorrichtung (1) nach einem der Ansprüche 2 und 5, wobei das Zwischenelement (6) mittels wenigstens eines radialen Stützlagers (55) vom Gehäuse (52) radial gestützt wird.

7. Vorrichtung (1) nach dem vorhergehenden Anspruch, wobei das radiale Stützlager (55) radial innerhalb des Betätigungsorgans (7) angeordnet ist.

8. Vorrichtung (1) nach Anspruch 1 allein oder in Kombination mit einem der Ansprüche 3 bis 7, wobei das Ausgangselement (3) einen Drehmomenteingang einer Doppelkupplung und/oder einer rotierenden elektrischen Maschine bildet.

9. Vorrichtung (1) nach Anspruch 2 allein oder in Kombination mit einem der Ansprüche 3 bis 7, wobei das Ausgangselement (3) einen Drehmomenteingang einer Doppelkupplung bildet.

## Claims

1. Torque transmission device (1), particularly for a motor vehicle, comprising:
- a torque input element (2), adapted to be rotationally coupled to a crankshaft of an internal combustion engine,
- a torque output element (3), adapted to be rotationally coupled to at least one input shaft of a gearbox and/or to a rotary electrical machine, the torque input element being able to pivot relative to the torque output element around a rotation axis (X),
- at least one resilient return unit (4) acting against the rotation of the output element relative to the input element,
- a clutch (5), selectively coupling the input and output elements by friction,
- an intermediate element (6) arranged between the resilient return unit and the clutch for transmission of the torque, and
- a clutch actuation unit (7), such that the resilient return unit, the clutch and the actuation unit succeed one another radially,
- the clutch (5) comprising:
- an input disk holder (20) rotationally integral with the intermediate element,
- an output disk holder (21) rotationally integral with the output element,
- a multi-disk assembly (22) comprising at least one friction disk (23) rotationally integral with one of the input and output disk holders, at least two plates (24) respectively disposed on either side of each friction disk, rotationally integral with the other of the input and output disk holders, and friction linings (25) disposed between the plates and a friction disk, the clutch (5) describing a disengaged position and an engaged position in which said plates and the friction disk clamp the friction linings so as to transmit torque between the input disk holder (20) and the output disk holder (21),
- the actuation unit (7) comprises an annular piston (45) which is fitted such as to slide axially on the exterior of an inner tube (46), with the piston and the tube forming an actuation chamber (48), and a rotary stop (49) which is supported by the piston and cooperates with the force transmission unit,
**characterized in that** the clutch (5) and the actuation unit (7) are stacked radially going towards the axis of rotation X.

2. Torque transmission device (1), particularly for a motor vehicle, comprising:
- a torque input element (2), adapted to be rotationally coupled to a crankshaft of an internal combustion engine,
- a torque output element (3), adapted to be rotationally coupled to at least one input shaft of a gearbox and/or to a rotary electrical machine, the torque input element being able to pivot relative to the torque output element around a rotation axis (X),
- at least one resilient return unit (4) acting against the rotation of the output element relative to the input element,
- a clutch (5), selectively coupling the input and output elements by friction,
- an intermediate element (6) arranged between the resilient return unit and the clutch for transmission of the torque, and
- a clutch actuation unit (7), such that the resilient return unit, the clutch and the actuation unit succeed one another radially, the clutch (5) comprising:
- an input disk holder (20) rotationally integral with the intermediate element,
- an output disk holder (21) rotationally integral with the output element,
- a multi-disk assembly (22) comprising at least one friction disk (23) rotationally integral with one of the input and output disk holders, at least two plates (24) respectively disposed on either side of each friction disk, rotationally integral with the other of the input and output disk holders, and friction linings (25) disposed between the plates and a friction disk, the clutch (5) describing a disengaged position and an engaged position in which said plates and the friction disk clamp the friction linings so as to transmit torque between the input disk holder (20) and the output disk holder (21),
- the actuation unit (7) comprises an annular piston (45) which is fitted such as to slide axially on the exterior of an inner tube (46), with the piston and the tube forming an actuation chamber (48), and a rotary stop (49) which is supported by the piston and cooperates with the force transmission unit,
- the output element (3) forming a torque input of an electric rotating machine,
**characterized in that** the device comprises a casing (52) adapted to be fixed to the gearbox, the casing comprising a radial extension partition (53), the partition defining at least one supply network for the actuation chamber (48); the partition (53) forming a sealed barrier between the resilient return unit (4) and the clutch (5).

3. Device (1) according to claim 2, the clutch (5) and the actuation unit (7) being stacked radially going towards the axis of rotation X.

4. Device (1) according to one of the preceding claims, the resilient return unit (4), the clutch (5) and the actuation unit (7) being stacked radially going towards the axis of rotation X.

5. Device (1) according to claim 2, the piston (45) having a U-shape.

6. Device (1) according to any one of claims 2 and 5, the intermediate element (6) being supported radially by the casing (52), by means of at least one radial support bearing (55).

7. Device (1) according to the preceding claim, the radial support bearing (55) being radially disposed inside the actuation unit (7).

8. Device (1) according to claim 1 alone or in combination with one of claims 3 to 7, the output element (3) forming a torque input of a dual clutch and/or a rotary electrical machine.

9. Device (1) according to claim 2 alone or in combination with any one of claims 3 to 7, the output element (3) forming a torque input of a dual clutch.
